# EUROPÄISCHE PATENTANMELDUNG

(11) **EP 0 784 175 A2**
(43) Veröffentlichungstag der Anmeldung: **16.07.1997**
(21) Anmeldenummer: 97100063.3
(22) Anmeldetag: 03.01.1997
(51) Int. Cl.: F16K 31/04

(54) **Elektromotorischer Stellantrieb**

(30) Priorität: 12.01.1996 DE 19600942
(71) Anmelder: SIEMENS AKTIENGESELLSCHAFT, 80333 München (DE)
(72) Erfinder: Bleibinhaus, Jörg, Dipl.-Ing., 90547 Stein (DE); Kempkes, Joachim, Dr., 90459 Nürnberg (DE)

(57) **Zusammenfassung**

Die Erfindung betrifft einen elektromotorischen Stellantrieb, bei dem mittels eines Antriebsmotors (5) ein Stellglied (2) zwischen einer Offen- und einer Zu-Stellung verstellbar ist. Die Dichtheit an dem Stellglied kann ohne zusätzliche Spannvorrichtung dadurch sichergestellt werden, daß dem Antriebsmotor (5) nach Erreichen der Zu-Stellung des Stellgliedes (2) mittels eines Steuerprogrammes in zeitlichen Abständen Einschaltbefehle erteilt werden, durch die jeweils ein weiterer Antrieb des Stellgliedes (2) durch den Antriebsmotor (5) in Richtung der Zu-Stellung bewirkt ist.

## Beschreibung

Die Erfindung bezieht sich auf einen elektromotorischen Stellantrieb, bei dem mittels eines Antriebsmotors ein Stellglied zwischen einer Offen- und einer Zu-Stellung verstellbar ist.

Mit Rohrleitungsarmaturen gekoppelte Stellantriebe haben u.a. die Aufgabe, in der Zu-Stellung der Armatur die betreffende Rohrleitung abzusperren. Es gibt Anwendungsfälle, bei denen die Rohrleitungsarmatur im warmen Zustand geschlossen wird. Stellantriebe sind in der Regel so ausgelegt, daß beim Schließvorgang der Antriebsmotor des Stellantriebes bei einem Drehmoment abgeschaltet wird, das zu einem dichten Verschließen der Armatur ausreicht. Kühlt die im warmen Zustand geschlossene Armatur ab, dann schrumpfen die zwischen dem Stellantrieb und der Armatur liegenden Verbindungsteile, wodurch der Grad der im warmen Zustand erreichten Verspannung der Armatur reduziert wird, so daß es zu einer Leckage an der Armatur kommen kann.

Zur Aufrechterhaltung einer kontinuierlichen Anpreßkraft in der Schließstellung eines Ventiles ist es aus der EP-A-0 327 676 bekannt, ein Federpaket vorzusehen, welches beim Anfahren der Schließstellung des Ventiles durch den Antriebsmotor gespannt wird und nach dem Abschalten des Motors die Anpreßkraft für das Ventil aufrechterhält. Die Anordnung eines solchen Federpaketes erfordert einen entsprechend hohen Platzbedarf.

Der Erfindung liegt die Aufgabe zugrunde, einen elektromotorischen Stellantrieb so weiter zu bilden, daß auch ohne eine zusätzliche Spannvorrichtung die Dichtheit einer Armatur während und nach einem Abkühlvorgang gewährleistet ist.

Die Lösung der gestellten Aufgabe gelingt nach der Erfindung dadurch, daß dem Antriebsmotor nach Erreichen der Zu-Stellung des Stellgliedes mittels eines Steuerprogrammes in zeitlichen Abständen Einschaltbefehle erteilt werden, durch die jeweils ein weiterer Antrieb des Stellgliedes durch den Antriebsmotor in Richtung der Zu-Stellung bewirkt ist. Durch die in zeitlichen Abständen erfolgenden Einschaltbefehle wird die Armatur von dem Antriebsmotor immer wieder in die Zu-Stellung verfahren, so daß bei einer infolge der Abkühlung nachlassenden Verspannung der Armatur diese immer wieder neu in ihrer Zustellung verspannt wird.

Die einfachste Art der Steuerung ist, daß die zeitlichen Abstände der Steuerbefehle durch das Steuerprogramm fest vorgegeben sind.

Eine Steuerung des Antriebsmotors in Abhängigkeit von den tatsächlichen Gegebenheiten wird dadurch erreicht, daß mittels mindestens eines Sensorelementes die bei einem Einschaltbefehl des Antriebsmotors am Stellglied auftretende Positionsänderung erfaßt und der zeitliche Abstand für den jeweils nächsten Einschaltbefehl in Abhängigkeit von dieser Positionsänderung variiert wird. So wird beispielsweise bei einer am Stellglied gemessenen relativ großen Positionsänderung der nächste Einschaltbefehl in einem relativ kleinen zeitlichen Abstand gegeben und bei kleiner werdenden Positionsänderungen des Stellgliedes der zeitliche Abstand zwischen den Einschaltbefehen immer weiter vergrößert, bis schließlich die Abgabe von Einschaltbefehlen ganz eingestellt wird, wenn keine Positionsänderung mehr feststellbar ist.

Bei einer Steuerung des Antriebsmotors in Abhängigkeit von der thermischen Zeitkonstante der Armatur werden die Einschaltbefehle zu Beginn der Abkühlphase, wenn der Temperaturabfall noch einen steilen Verlauf aufweist, in entsprechend kurzen zeitlichen Abständen gegeben. Mit abnehmender Steilheit des Temperaturverlaufes werden dann die zeitlichen Abstände entsprechend vergrößert, bis die Einschaltbefehle schließlich ganz abgeschaltet werden.

Anhand einer schematischen Darstellung eines Stellantriebes wird die Erfindung nachfolgend noch näher erläutert.

Mit 1 ist eine Armatur bezeichnet, deren Ventilteller 2 über eine Stellspindel 3 auf- und abbewegt werden kann. Die Verstellspindel 3 wird über ein Getriebe 4 von einem Antriebsmotor 5 betätigt. Dem Antriebsmotor 5 ist eine Steuereinheit 6 zugeordnet, welche dem Antriebsmotor nach einem bestimmten Steuerprogramm Einschaltbefehle erteilt.

An dem Antriebsmotor 5 kann ein Sensorelement 7 angeordnet sein, welches den Drehwinkel des Motorläufers bzw. der Motorwelle, der ein Maß für die Positonsänderung des Ventiltellers 2 ist, erfaßt. Von dem Sensorelement 7 werden der jeweiligen Postionsänderung des Ventiltellers 2 entsprechende Signale an die Steuereinheit 6 übertragen. Durch diese Signale wird der zeitliche Abstand der von der Steuereinheit 6 an den Antriebsmotor 5 abgegebenen Einschaltbefehle gesteuert und zwar derart, daß bei relativ großen Positionsänderung der zeitliche Abstand zwischen den Einschaltbefehlen klein ist, und mit abnehmender Positionsänderung vergrößert wird, bis bei einer Positionsänderung 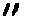 Null" die Abgabe von Einschaltbefehlen unterbleibt.

Wird eine Armatur im warmen Zustand geschlossen, so kühlt die Armatur nach einer e-Funktion ab, d.h. unmittelbar nach dem Schließvorgang weist die Abkühlung ihrer steilsten Verlauf auf. Infolge dieser starken Abkühlung nimmt auch der Anpreßdruck am Ventilteller 2 entsprechend stark ab, so daß bei einem Nachspannen durch den Antriebsmotor 5 auch eine relativ große Postionsänderung am Ventilteller 2 erfolgt. Damit wird der nächste Einschaltbefehl schon in einem kurzen Zeitabstand gegeben und der Ventilteller wieder nachgespannt. Hierdurch ist auch während der starken Abkühlphase ein dichtes Schließen des Ventiltellers 2 sichergestellt.

Anstelle der Erfassung der Postionsänderung kann auch mittels eines Temperaturmeßgliedes die Temperatur an der Armatur erfaßt und das Steuerprogramm in Abhängigkeit von der Temperatur gestaltet werden.

Wird der Antriebsmotor 5 über einen Umrichter gespeist, dann besteht die Möglichkeit, durch entsprechende Regulierung der Spannungshöhe und der Frequenz der Speisespannung das Kippmoment des Antriebmotors so einzustellen, daß es dem Verspannungsmoment es Ventiltellers 2 entspricht. Damit kommt der Antriebsmotor 5 jeweils beim Erreichen des notwendigen Verspannungsmomentes wieder zum Stillstand. Außerdem besteht nicht die Gefahr eines zu starken Verspannens des Ventiltellers 2.

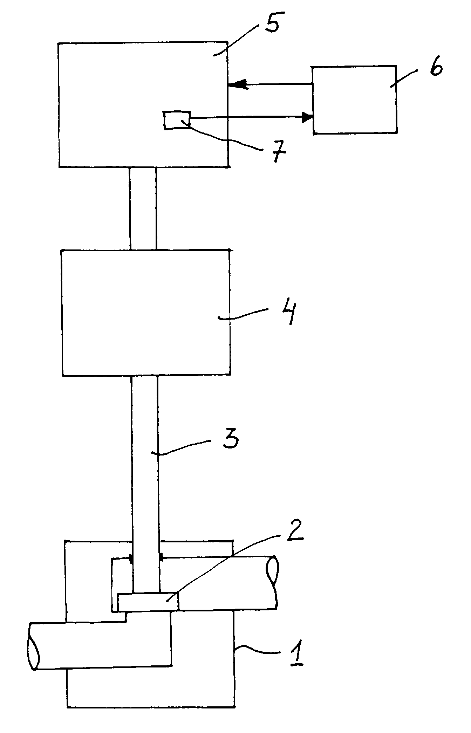

## Patentansprüche

1. Elektromotorischer Stellantrieb, bei dem mittels eines Antriebsmotors (5) ein Stellglied (2) zwischen einer Offen- und einer Zu-Stellung verstellbar ist,
**dadurch gekennzeichnet,**
daß dem Antriebsmotor (5) nach Erreichen der Zu-Stellung des Stellgliedes (2) mittels eines Steuerprogrammes in zeitlichen Abständen Einschaltbefehle erteilt werden, durch die jeweils ein weiterer Antrieb des Stellgliedes (2) durch den Antriebsmotor (5) in Richtung der Zu-Stellung bewirkt ist.

2. Stellantrieb nach Anspruch 1,
**dadurch gekennzeichnet,**
daß die zeitlichen Abstände der Einschaltbefehle durch das Steuerprogramm fest vorgegeben sind.

3. Stellantrieb nach Anspruch 1,
**dadurch gekennzeichnet,**
daß mittels mindestens eines Sensorelementes (7) die bei einem Einschaltbefehl des Antriebmotors (5) am Stellglied (2) auftretende Positionsänderung erfaßt und der zeitliche Abstand für den jeweils nächsten Einschaltbefehl in Abhängigkeit von dieser Positionsänderung variiert wird.

4. Stellantrieb nach Anspruch 1,
**dadurch gekennzeichnet,**
daß die Einschaltbefehle mittels des Steuerprogrammes in Abhängigkeit von der thermischen Zeitkonstante des Stellgliedes (2) erteilt sind.
